# EUROPEAN PATENT SPECIFICATION

(11) **EP 2 024 772 B1**
(45) Date of publication and mention of the grant of the patent: **30.12.2009**
(21) Application number: 07733864.8
(22) Date of filing: 25.05.2007
(51) Int. Cl.: G02B 21/36

(54) **METHOD AND SYSTEM FOR DIGITIZING A SPECIMEN WITH FLUORESCENT TARGET POINTS**
VERFAHREN UND SYSTEM ZUM DIGITALISIEREN EINER PROBE MIT FLUORESZENZZIELPUNKTEN
PROCÉDÉ ET SYSTÈME DE NUMÉRISATION D'UN SPÉCIMEN À POINTS CIBLES FLUORESCENTS

(30) Priority: 26.05.2006 HU 0600435
(43) Date of publication of application: 18.02.2009
(73) Proprietor: 3Dhistech Kft., 1121 Budapest (HU)
(72) Inventor: VARGA, Viktor, Sebestyén, 2119 Pécel (HU); MOLNÁR, Béla, 1182 Budapest (HU); KAMARÁS, Viktor, Imre, 1145 Budapest (HU)
(74) Representative: Szabo, Zsolt
(86) International application number: PCT/HU2007/000047
(87) International publication number: WO 2007/138369

(56) References cited:
- WO-A-01/54052
- WO-A-03/012518
- WO-A-2006/024967
- US-A1- 2003 210 262
- US-A1- 2003 231 791

## Description

The present invention relates to a method and a system for digitizing a specimen with fluorescent target points. The invention further relates to a set of microscope slides to be scanned by an automated fluorescent imaging system.

The analysis of tissue sections is an important field of medical diagnostics. For conducting a tissue analysis the tissue specimen taken from a patient is sliced up in very fine sections (e.g. 2 to 10 µm thick), which are then placed on glass plates and are stained with various dyes. Finally, the slide bearing the resulting specimen is analyzed with a microscope.

The efficiency of the analysis can be substantially enhanced by first digitizing the specimens using an automated imaging device comprising a microscope and afterwards analyzing the digital images by a suitable software for processing the image files. Such imaging devices usually comprise a camera coupled to the optical system of a microscope. Generally, the field of view of the camera corresponds to a relatively small portion of the whole slide, which means that in order to scan the whole slide it is divided into fields corresponding to the field of view of the optical system and an image is captured of each field. The individual images (referred to as image tiles) are then "stitched" together in a software application to form single continuous image of the slide. However, focusing on every single field of view is a rather time consuming operation and the problem of optimizing focusing has been addressed by many prior art documents.

In the case of fluorescence measurements the specimens are labeled with a suitable molecule (fluorochrome) the distribution of which will become evident after illuminating the specimen with fluorescence excitation light. An arrangement of filters and chromatic beam splitters are employed so that when the specimen is illuminated with fluorescence excitation light fluorescence of different wavelength is emitted in response and is transmitted (or reflected) by the chromatic beam splitter(s) on to the imaging apparatus (e.g. microscope objective and camera). The light intensity cannot be increased since the fluorescence light emitted by the fluorochromes on the specimen is not a linear function of the illumination intensity. This means that the exposition time can be extremely long compared to bright field microscopy measurements where the tissue specimens are stained with visible dyes and can hence be analyzed in transmitted light. The intensity of the transmitted light can be increased thereby decreasing the necessary exposition time to the order of 0,5 ms whereas in the case of fluorescent measurements the exposition time can be up to the order of 1000 ms.

Another significant difference between bright field microscopy and fluorescence microscopy is that while in bright field microscopy the exposition time can be estimated aforehand and the same exposition time can be used for a plurality of similar specimens, in fluorescence microscopy it can vary between 5 to 1000 ms depending on the number and distribution of fluorochromes in each given specimen. This means that when focusing on a fluorescence specimen both the focus distance and the exposition time have to be determined.

Another problem related to fluorescence microscopy is finding the specimen on the slide, and more specifically finding the fluorescent target points within the specimen. These fluorescent target points can comprise the auto-fluorescent points of the specimen and/or the fluorochromes used to stain the specimen.

The specimen is generally an extremely thin tissue layer hardly visible in normal light. In bright field measurements the tissue is stained with a color dye whereby the target points become visible and a preview image can be captured of the slide by a low-magnification camera prior to the high-magnification microscopic scanning. Before performing the high-magnification scanning the target points are identified in the preview image, for example based on the relative contrasts, and only those fields are rescanned at a higher magnification which contain target points. In this way a substantial slide area is automatically left out of the high-magnification scanning and significant time is saved by not having to focus on blank (i.e. containing no target points) fields. Such an automated microscope comprising a preview camera is disclosed in International Patent Appl. No. PCT/HU2007/000018 which is hereby incorporated by reference in its entirety.

However, such preview cameras use visible light for illumination and, as mentioned before, the specimen constitutes of an extremely thin tissue layer. Hence neither the specimen itself nor the fluorochromes staining the specimen can be detected on the slide. It must be noted that all of the specimen area might not contain relevant measurement fields either, which means that even if the specimen area were to be identified it would not be possible to focus on all of the specimen fields as in the case of bright field measurements.

Using a preview camera in bright field microscopy reduces focusing during high-magnification scanning to a one-dimensional problem: the location of the specimen fields and the exposition time is known, hence, only the focus distance needs to be varied. In fluorescence microscopy however, focusing is a three-dimensional problem: the location of the target fields, the exposition time and the focus distance are all unknown. Also, and as mentioned before, focusing is an extremely time consuming procedure because of the high exposition time needed.

Therefore it is even more crucial to optimize the process of focusing in the case of fluorescence imaging in order to speed up the scanning and to shorten the scanning time while maintaining the quality of the obtained image.

It is an object of the present invention to overcome the above-mentioned problems of fluorescence microscopy by reducing the number of fields to be focused on. It is a further object to reduce the overall time needed for focusing on a given field.

In one aspect of the present invention, a method for digitizing a specimen on a microscope slide is provided, said specimen having fluorescent target points. The method uses a fluorescence microscope system for detecting and scanning said fluorescent target points and comprises the steps of
a) marking the position of said specimen on said slide by visible marking means to define a specimen area containing said specimen and said fluorescent target points;
b) capturing a bright field image of at least a portion of the slide at a first optical magnification, said portion(s) containing the specimen area and determining, from the visible marking means, a position of target fields falling within said specimen area; and
c) scanning the target fields of the specimen area at a second optical magnification higher than said first optical magnification, said scanning including focusing on at least a part of said target fields.

Possible further preferred variants of the method according to the present invention are specified by claims 2 to 12.

In a further aspect of the present invention a fluorescent imaging system for the automated digitization of a fluorescent microscope slide having visible marking means is provided. The system comprises:
a first imaging device having a first optical magnification and being adapted for bright field imaging;
a second imaging device having a second optical magnification higher than said first optical magnification and being adapted for fluorescent imaging;
a slide displacing device for supporting the microscope slide and displacing said microscope slide relative to said first and second imaging device; and
a control unit connected to said devices for controlling the process of digitization.

Further preferred embodiments of the fluorescent imaging system according to the present invention are covered by claims 13 to 17.

In a yet further aspect of the present invention a set of microscope slides carrying specimens having fluorescent target points and to be scanned by the automated fluorescent imaging system according to the present invention is provided, wherein a position of the specimen on each of said slides is marked by visible marking means defining a specimen area containing said specimen and said fluorescent target points.

Further details of the invention will be apparent from the accompanying figures and exemplary embodiments.

Fig. 1 is a schematic top view of an automated fluorescence microscope system according to the invention.

Fig. 2 is a schematic view along the direction of the Y axis of a slide held in a slide holding frame arranged on a rail, as seen from the preview camera.

Fig. 3 is a schematic cross-sectional view of an exemplary embodiment of a fluorescence microscope used in the automated fluorescence microscope system according to the invention.

Fig. 4 is a schematic illustration of a preview image taken by the preview camera.

Fig. 5 is an enlarged view taken at circle A in Fig. 4.

Fig. 6 is a diagram illustrating the histogram method used in an exemplary embodiment of the method according to the invention.

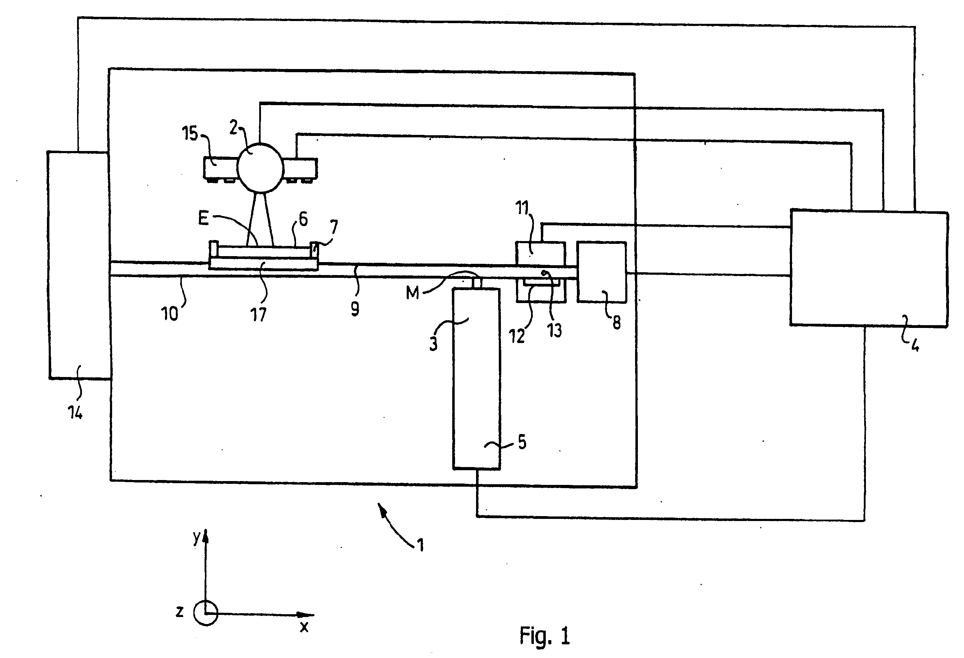

Fig. 1 shows a schematic top plan view of a preferred embodiment of an automated fluorescence microscope system 1 according to the invention. The system 1 comprises two digital imaging devices. In this embodiment the first imaging device is a low magnification preview camera 2 with a first field of view E, while the second imaging device comprises a high magnification, high resolution microscope objective 3 and a CCD camera 5 connected to a control unit - in this particular case to a computer 4 - and is arranged in such a way as to digitize the image formed by the objective 3. In order to lose no information during digitization, preferably the resolution of the CCD camera 5 is at least as high as that of the objective 3. The first imaging device performs digitization of a first field of view E at each slide position, while the second imaging device digitizes a second field of view M at each slide position.

A microscope slide 6 (typically carrying a biological specimen/tissue sample) to be digitized can be transported between the preview camera 2 and the objective 3 by means of a microscope slide displacing device. The slide 6 is arranged on a slide holding frame 7. Such a slide displacing device is known e.g. from International Publication Pamphlet No. W02006/024967, which is hereby incorporated by reference in its entirety and therefore will be only briefly discussed in the present description. The slide holding frame 7 is attached via known suspension means to a carrier surface 17 of a rail 10 lying in the axis X. A first stepping motor 8 is capable of displacing the carrier surface 17 along the rail 10 by means of a threaded bar 9 driven by the stepping motor 8. As carrier surface 17 is displaced so is slide 6 and slide holding frame 7, too, via the known suspension means. Similarly, the rail 10 is arranged on rail 18 lying in the axis Z and can be displaced by means of a threaded bar 13 driven by a second stepping motor 11. In this way the slide holding frame 7, and hence the slide 6, can be moved both along the axes X and Z. The stepping motors 8 and 11 are preferably also controlled by the computer 4.

The plane determined by axis X and Z can be horizontal. In this case it is sufficient if slide holding frame 7 only supports slide 6 from below. However, the described embodiment show such a construction where axis Z has a vertical orientation thus slide 6 is maintained in slide holding frame 7 at a vertical position with its longitudinal edges lying horizontally. It should be noted that the plane determined by axis X and Z can be at any angle to the horizontal.

Any known means can be used for changing the relative distance of the slide 6 and the microscope objective 3 and thereby focusing. Advantageously a focusing arm can be used to displace the slide 6 along the direction of the axis Y as described in International Publication Pamphlet No. W02006/024967. It is also possible to move the objective 3 e.g. by piezo-crystals, however, for the sake of simplicity, we will be referring to embodiments where the slide 6 is displaced relative to the objective 3.

Advantageously a slide feeding apparatus 14 is connected to one end of the X direction rail 10, suitable for placing the slides 6 automatically in and out of the slide holding frame 7. Such slide feeding apparatus 14 is known, for example from International Publication Pamphlet No. W02004/113989.

The necessary illumination for capturing the preview image is assured by any common light source 15 arranged in the vicinity of the preview camera 2 and directed on to the slide 6.

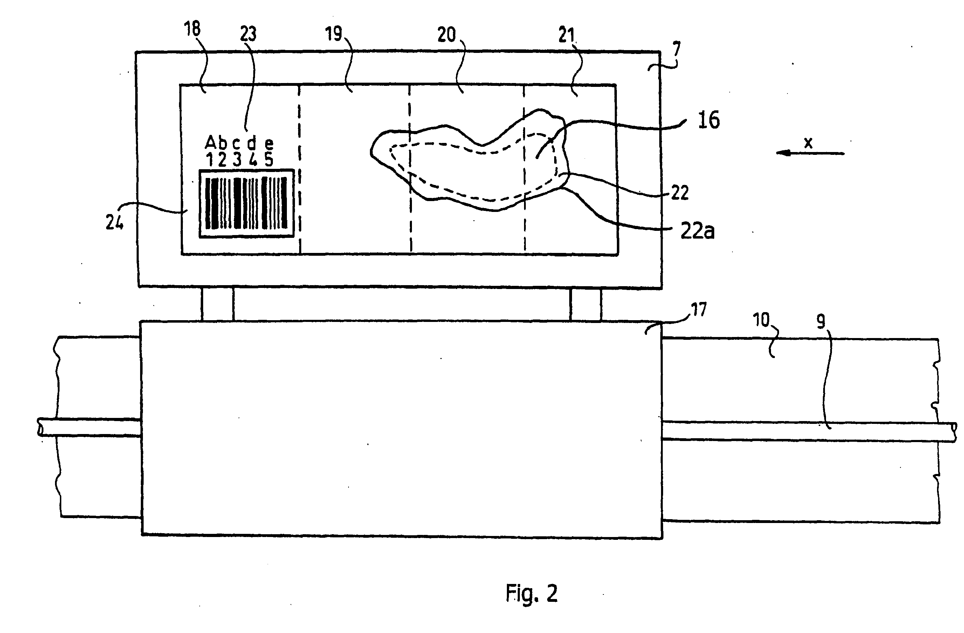

Fig. 2 shows slide 6 secured in the slide holding frame 7, which is attached to the carrier surface 17 of the rail 10 parallel to the axis X via known suspension means. Such suspension means can be for example a resilient parallel linkage as disclosed in International Publication Pamphlet No. W02006/024967. In the present example the physical size of the slide 6 is 1" by 3" (approx. 25,4 mm by 76,2 mm). The preview camera 2 can be any commonly used commercially available 640 × 480 pixels webcamera. The preview camera 2 can be arranged in such a way that the whole of the slide 6 falls within the field of view E of the preview camera 2, or in such a way that only a portion of the slide 6 (e.g. a little more than a 1" by 3/4" (approx. 25,4 mm by 19,05 mm) portion as described in International Patent Appl. No. PCT/HU2007/000018) falls within the field of view E. In the latter case the montage image of the whole slide 6 can constitute of four image tiles corresponding to four portions 18, 19, 20, 21 of the slide 6 (shown with dashed lines in Fig. 2) of which the first portion 18 can be a special informational portion carrying identification data and other information relevant for the slide 6 for example in the form of writing 23 and/or a barcode 24.

As mentioned before the specimen 16 placed on the slide 6 cannot be seen in visible light illumination produced by the light source 15. Therefore prior to inserting the slide 6 into the automated fluorescence microscope system 1 the position of the specimen 16 (indicated with a dashed line) is marked on slide 6 by visible marking means 22. For example the pathologist can mark the position of the specimen 16 by contouring it with a pen right after placing the specimen 16 on the slide 6. The marking means 22 in Fig 2 is a pen line drawn around specimen area 22a containing the specimen 16, which is visible in the preview image of the preview camera 2. However, any other type of marking means 22 can be used provided it is suitable for marking the specimen area 22a containing the specimen 16, the specimen area 22a being smaller than the whole of the slide 6 thereby reducing substantially the area to be scanned on the slide 6. For example if a plurality of specimens 16 on a plurality of slides 6 to be scanned all have a more or less regular size and form it is enough to mark one of the corners of the specimen 16 (e.g. the upper left corner) from which the specimen area 22a and its position on the slide 6 can be calculated.

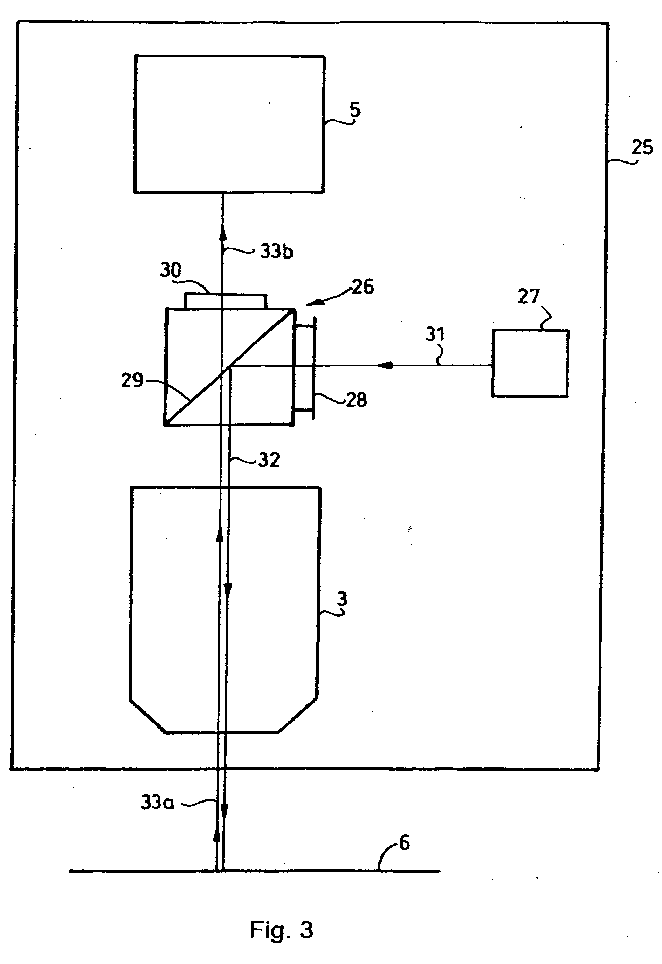

The second imaging device can be a conventional digital fluorescence microscope 25 as schematically shown in Fig 3. The main components of such a digital fluorescence microscope 25 are the objective 3, an optical block 26 also called a filter cube, a fluorescence light source 27 and a digital camera, e.g. the CCD camera 5. The objective 3 together with the CCD camera 5 define the field of view M of the second imaging device, that is, the fluorescence microscope 25. For example the objective 3 can have an optical primary magnification of twenty, which can be used in combination with a 1024 × 768 pixels resolution CCD camera 5. Every single pixel of the CCD camera 5 could correspond to a 0.23 µm by 0.23 µm square of the slide 6 (before the 20x magnification), therefore the field of view of the M of the microscope 25 would be approx. 235 µm by 176 µm. For the sake of clarity a corresponding rectangular area of the slide 6 will hence be referred to as slide field (or simply field) while the image captured of such a field will be termed as image tile (or tile). The specimen 16 can be for example a standard tissue section of approx. 2 to 2.5 cm².

Generally a mercury (Hg) or a xenon (Xe) arc lamp is used as the fluorescence light source 27 because suitable optical blocks 26 are readily available for these two kinds of lamps. Other fluorescence light source 27 can be used as well since suitable optical block 26 can be designed for any type of fluorescence light source 27.

The optical block 26 includes a wavelength selective excitation filter 28, a beam splitter 29 (or dichromatic mirror), and a barrier (or emission) filter 30. Dichromatic beam splitters 29 are generally specialized interference filters designed to reflect or pass light of specific wavelengths when placed into the light path at a 45° angle (as seen in the figure).

The digitizing method of the invention will now be described with reference to the above-illustrated exemplary embodiment of an automated fluorescence microscope system 1 according to the invention.

Slides 6 to be digitized are placed into the slide feeding apparatus 14, which introduces the first slide 6 into the slide holding frame 7, e.g. via a robotic arm. If the microscope system 1 is not provided with a slide feeding apparatus 14, then the user can introduce slide 6 through a suitably designed opening or any other means into the microscope system 1, where slide 6 ends up in the slide holding frame 7.

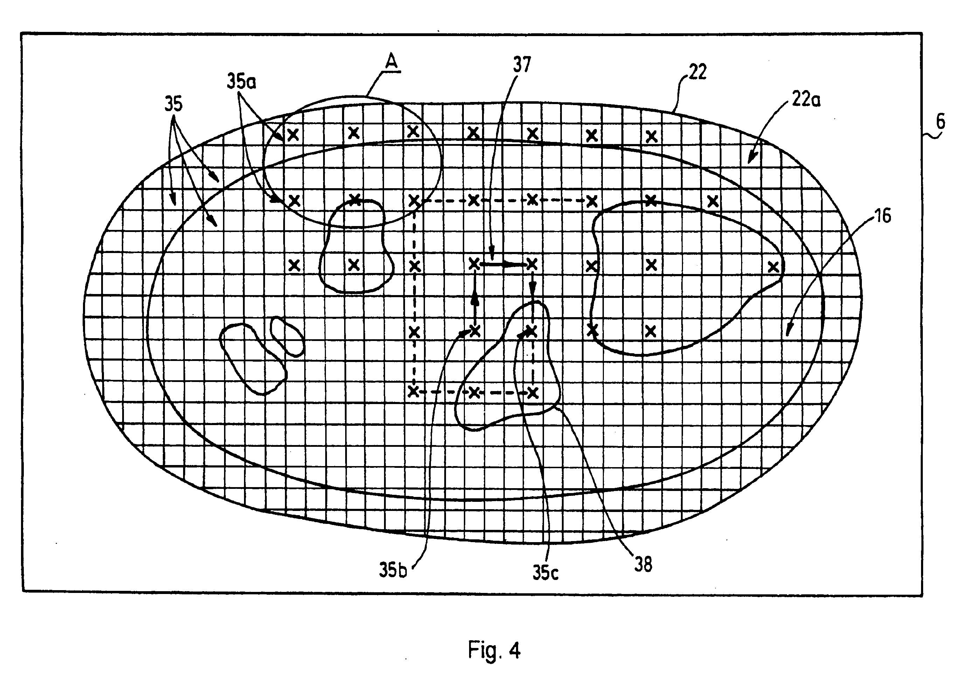

The following steps are advantageously carried out under the command of the computer 4. The slide holding frame 7 is moved in front of the preview camera 2 along the X axis rail 10 via stepping motor 8 so that one of the portions 18, 19, 20, 21 falls within the field of view E of the preview camera 2. A preview image is captured and digital information is forwarded to the computer 4. Slide 6 is moved on and a preview image is captured of each specimen portion 19, 20, 21 and optionally of the informational portions 18, if any. Informational portions 18 can be scanned by any known scanning or imaging means (e.g. barcode scanner) and can be processed in any known way. The specimen portions 19, 20, 21 are processed and analyzed by the computer, which includes identifying the marking means 22 on the captured preview image(s) and determining the position of the specimen area 22a therefrom. Optionally the individual preview images of the slide portions 18, 19, 20, 21 can be fitted together to create a preview montage image, which can be shown to the user. For the sake of simplicity, Fig. 4 illustrates a preview image comprising the whole of the specimen area 22a containing the specimen 16 and being defined by marking means 22. Target slide fields 35 (corresponding in size to the field of view M of the fluorescence microscope 25) falling in the specimen area 22a are determined, meaning that a slide position is calculated for each of the target fields 35 for positioning the target field 35 under the microscope objective 3. It should be noted that Fig. 4 is a very schematic illustration since in reality some ten thousands of slide fields 35 would be necessary to cover all of the specimen area 22a. Also, the target slide fields 35 are advantageously overlapping regions of the slide 6 in order to facilitate creating the high magnification montage image (also called virtual slide) from the individual image tiles captured by the digital fluorescence microscope 25.

Once the preview image is captured it is processed by the computer 4 while the slide 6 is transported from the preview camera 2 to the second imaging device comprising the high magnification microscope objective 3 where high magnification image tiles are captured of at least some of the target fields 35.

The high magnification fluorescence imaging is carried out in the following way.

The light source 27 emits multispectral light 31, which passes through the excitation filter 28, which in turn produces excitation light 32 of a specific wavelength (or defined band of wavelength). Excitation light 32 passed by the excitation filter 28 reflects from the surface of the beam splitter 29 and is directed through the microscope objective 3 on the slide 6. If there are fluorochromes attached to the specimen piece within the target field under the objective 3, then the observed specimen piece fluoresces: subsequent to excitation it produces its own emission light 33a. This emission light 33a is gathered by the objective 3, passes back through the beam splitter 29, and is subsequently filtered by the barrier filter 30, which blocks the unwanted excitation wavelengths. In this case the microscope objective 3 serves first as a well-corrected condenser and secondly as the image-forming light gatherer. Finally the CCD camera 5 captures the filtered emission light 33b and digital information is forwarded to the computer 4.

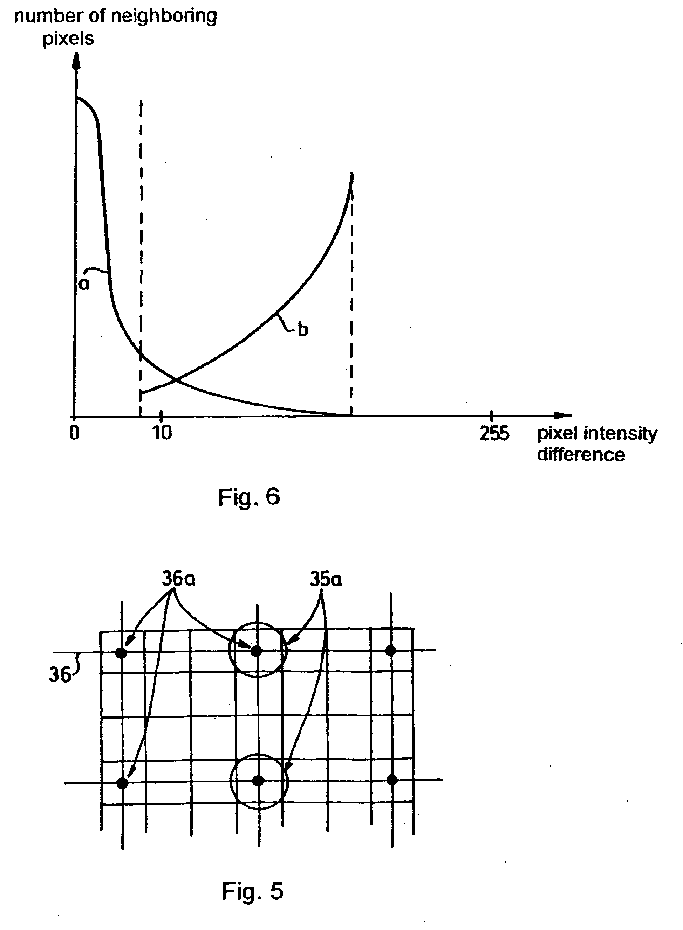

A preferred way of the high magnification fluorescence imaging according to the invention will now be described with reference to Fig 4 and 5.

As explained in the introductory part of the description in the case of fluorescence microscopy a large number of fields 35 have to be digitized of which only a portion contain observable fluorochromes (or target points). Furthermore focusing is extremely time consuming since both focus distance and exposition time are unknown variables. It is therefore crucial to provide such an imaging method that eliminates unnecessary focusing while maintaining the high quality of the resulting virtual slide.

Therefore the basic concept of the method according to the invention is to decrease the time needed for determining the focus distance for each slide field 35 to be scanned. This can be achieved in two ways, preferably used in combination:
(i) decreasing the number of slide fields 35 to be focused on and
(ii) decreasing the time needed for finding the optimal focus distance for a given slide field 35.

Item (i) can be achieved by selecting a plurality of target fields 35a and by focusing only on the selected target fields 35a. Focus distance is determined for each selected target field 35a, thereby a 3-dimensional data set is obtained corresponding to the determined optimal focus distance at each selected target field position (e.g. defined by the x, z coordinates of the slide holding frame 7 when a given selected target field 35a falls within the field of view M of the microscope 25). Next a focal surface is fitted on the obtained 3-dimensional data set, which provides an interpolated focal distance for all of the target fields 35. The focal surface is then used for scanning the entire specimen area 22a. The creation and use of focal surfaces are well-know from traditional bright field microscopy scanning and will therefore not be discussed in further detail.

For the purpose of selecting the plurality of target fields 35a to be focused on a suitable (virtual) grid 36 can be projected over the target slide fields 35 within the specimen area 22a and the selected target fields 35a can be the ones falling on a grid point 36a as illustrated in Fig. 5 which is an enlarged view taken at circle A in Fig. 4. A suitable grid 36 can have for example a grid distance of 3 to 5 target fields 35 in both X and Z directions (meaning that the grid 35 is rectangular if the target slide fields 35 are rectangular too). However, depending on the fluorescence specimen 16 other suitable grids 36 can be readily defined by a skilled person.

In order to decrease the time needed for finding the focus distance of a given slide field 35 as set out in item (ii) the followings are suggested, which can be applied alone or in combination:
- determining a fine focus range smaller than the maximum focus range and focusing only within this fine focus range;
- focusing on the target fields 35 using a lower exposition time.

The maximum focus range is defined by the upper and lower focus distance within which the focus distance can or should be varied.

Although the focal plane of the fluorescent microscope 25 is generally known and the slide holding frame 7 can be moved level with the focal plane due to the varying thickness of the specimen 16 the exact focus distance for the specimen 16 is unknown. Differing even by 10 microns from the presumed plane of the specimen 16 can lead to a situation where no image is visible on the image-capturing surface of the CCD camera 5. Therefore a practical maximum focus range (i.e. a distance interval) along the optical axis (axis Y) has to be estimated within which the focus distance should be sought for the examined specimen slide 6. Such an estimation can be based on the type of specimen 16 to be scanned, the thickness of the protecting cover glass placed over the specimen 16 on the type of slide 6, etc.. The maximum focus range can be an interval of typically 0,1-0,2 mm.

The fine focus range is a smaller range than the maximum focus range and is centered on an already measured focus distance. The idea behind using a fine focus range is that the focus distance of each target field 35 varies only within a very limited range compared to the maximum focus range, thus once the focus distance has been found for one of the target fields 35 a fine focus range centered on the measured focus distance can be defined and in the case of the rest of the target fields 35 it is enough to focus within this fine focus range.

For example the maximum focus range can be a focus distance interval of 0,2 mm, a focus distance for one of the target fields 35 is found to be at a certain value of the interval from which a fine focus distance can be defined in terms of a second, narrower interval, preferably at least half of the maximum focus range interval, even more preferably about 1/4th e.g. ±0,025 mm from the defined value of the first interval.

For the purpose of defining a fine focus range first of all a target field 35 has to be found, which contains fluorescent target points, i.e. auto-fluorescent specimen points and/or fluorochrome stains. Target fields 35 without fluorescent target points do not emit light and hence cannot be registered by the digital fluorescence microscope 25. Thus it is not possible to focus on such fields 35.

A number of image processing algorithms are available for deciding whether the captured image is well focused, i.e. whether it is sharp enough. Such algorithms normally analyze the difference in intensity between neighboring pixels. The optimal focus distance is that which results in the image with the most significant intensity differences.

In the case of fluorescence imaging the noise rate is always higher since any dust or other unwanted stain can have a certain auto-fluorescence, which makes it difficult to detect the auto-fluorescent specimen points and/or the fluorochromes. We have found that due to this high noise rate it is advantageous to use any of the known histogram methods illustrated in Fig. 6. The number of neighboring pixels having a certain pixel intensity difference is recorded and histogram "a" is created from the obtained figures. It should be noted that the algorithm could operate with the intensity difference between pixels being at a certain distance from each other instead of using immediate neighboring pixels.

In the present example pixel intensity is registered on 8 bits, meaning that the maximum pixel intensity is 255, which is also the maximum pixel intensity difference between any two neighboring pixels. As can be seen from the exemplary histogram "a" in Fig. 6 most of the neighboring pixels only have a few units of intensity difference, while significant intensity difference has only been registered for a couple of neighboring pixels. Next a cut-off value is defined: results for neighboring pixels having a lower intensity difference than the cut-off value are disregarded for ensuring noise filtering. For example the cut-off value can be 8, meaning that an intensity difference below 8 units can be accounted for by the auto-fluorescence of the specimen 16 hence it does not reflect a real target point and should not be considered when seeking to find best-focused image. The cut-off value can be an experimental value defined for certain types of tissue specimens or fluorochromes. However even this might not be sufficient for deciding on image sharpness, since some target fields 35 might only contain a couple of fluorescent target points or most of them can be faint, which means that the most relevant neighboring pixels having a higher intensity difference are very poorly represented in the histogram "a". To overcome this problem some algorithms multiply the histogram "a" with an appropriate weighting function for example a parabolic or exponential function "b". Any other weighting can be used too, which helps increase the weight of the number of neighboring pixels having higher intensity difference. Once the noise is filtered by applying the cut-off value and histogram "a" is multiplied with the weight function "b" the resulting values are integrated. The higher the integrated result the better focused is the image. It will be explained later on that the exposition time is not necessarily the same for all the images captured of a given target field 35 at different focus distances. Hence when comparing the histograms obtained at each focus distance the values are preferably normalized e.g. by dividing the values by the exposition time.

In an exemplary embodiment when trying to find a first focus distance in order to define the fine focus range the focus distance can be varied within an interval of 0,2 mm in a plurality of steps (e.g. 30-40 steps) and the captured image can be analyzed with any known algorithm (e.g. the types described above) for determining the best-focused image.

After focusing has been performed at every focus distance within the maximum focus range a special object-detecting algorithm can be used to decide whether the observed field 35 contains any target points. Or alternatively the same histogram algorithm can serve to decide whether any of the images are satisfactorily focused - if no well-focused image is found it means that there were no fluorescent target points contained in the observed field 35.

As said before not all target fields 35 contain fluorescent target points. It is therefore advantageous to have a special algorithm for finding a target field 35 for which a best-focused image can be obtained, meaning a target field 35 having fluorescent target points. A possible way could be to focus on the target fields 35 (or only on the selected fields 35a) one after the other as long as no best-focused image could be obtained. Starting from the vicinity of the marking means 22 has been found less advantageous since in most cases (for example when contouring the specimen 16 with a pen) the specimen 16 is further away from the marking means 22 and precious time is lost trying to focus on target fields 35 within the specimen area 22a but outside of the actual specimen 16. Advantageously focusing can be started at an inner field 35 of the specimen area 22a, for example at starting field 35b (Fig. 4) closest to the geometrical center of the specimen area 22a. The starting field 35b can be defined in any other way too and can advantageously coincide with a selected field 35a (if any). It is also advantageous to move along a spiral path 37 in case focusing could not be performed on the starting field 35b. The spiral path 37 can be formed by neighboring fields 35 (or neighboring selected fields 35a) and focusing can be attempted at each field 35 (or selected field 35a) falling on the spiral path 37 as long as no fluorescent field 35c is found on which focusing can be performed, i.e. a fluorescent field 35c which contains fluorescent target points. If a selected field 35a was used as the starting field 35b the spiral path 37 can link the starting fields 35b with other selected fields 35a in a spiral pattern (as shown in Fig. 4) and the next selected field 35a to be focused on can be the one lying next along the spiral path 37. For better understanding the fluorescent areas 38 containing the individual fluorescent target points have been illustrated in Fig. 4. This means that the fluorescent fields 35c contain a portion of the fluorescent areas 38.

Once a fluorescent field 35c is found that could be focused on the obtained focus distance can be used to define the fine focus range. The interval of the fine focus range is preferably at least twice as small as the maximum focus range. More preferably it as three to five times, e.g. four times as small as the maximum focus range. Particularly, the fine focus range can be ±25 µm from the first obtained focus distance, with the maximum focus range interval being 0,2 mm). The interval of the fine focus range can be an experimental value or it can rely on other considerations (type of specimen 16, vertical distribution of fluorochromes, etc.). In another advantageous embodiment the fine focus range is not a constant throughout the whole specimen area 22a, instead a pre-given fine focus range interval (e.g. a 50 µm interval: ±25 µm from an indefinite center) is used in combination with the focus distance of the closest target field 35 for which focusing has already been performed and optimal focus distance could be determined.

However varying the focus distance alone is usually not enough for capturing any image that could be evaluated at all since the exposition time is also an unknown factor. Exposition time can vary significantly with the focus distance therefore it is not enough to change the focus distance, the exposition time has to be varied in order to capture an image of sufficient pixel intensity.

In general the required exposition time in fluorescence microscopy can vary between 5 and 1000 ms. The fluorescent target points are not visible in an underexposed image, while an overexposed image cannot be evaluated either due to saturation. It is therefore very important to choose an adequate exposition time.

If the pixel intensity of the brightest pixels of the captured image does not reach a given intensity level than the image cannot be evaluated and a new image should be captured at the same focus distance but using a higher exposition time. Similarly if the brightest pixels are at the maximum of the intensity range (e.g. close to 255 using an 8 bit representation) then imaging should be repeated with a lower exposition time to inhibit saturation. This is the case both when seeking to find a first fluorescent field 35c and when a fine focusing range is already at hand.

The second proposition under item (ii) concerns using a lower exposition time during focusing then would be necessary for assuring an optimal quality virtual slide in order to reduce overall focusing time for a given target field 35. The following method can be applied both when focusing within the maximal focus range and when focusing within a fine focus range.

In order to save time focusing can first be attempted using a short exposition time for the observed target field 35.

In an exemplary embodiment the slide-objective distance is adjusted to a first value falling either within the maximal focus range or within the fine focus range if such has already been determined. An image is captured at the chosen distance and the intensity of the brightest pixels are determined. For the purpose of focusing it has been found that it is enough if the maximal pixel intensity values fall within the 1/8th and 1/4th of the maximum possible intensity, i.e. using an 8 bit scale the maximum possible intensity corresponds to 255 therefore highest pixel intensity values can be between 32 and 64. Of course other preferred intensity ranges can be readily determined.

Focusing is repeated at the given first distance using higher and higher exposition times as long as the highest pixel intensities do not fall within the pre-determined range or as long as the exposition time is below a pre-determined maximal value (for example 1000 ms). In a preferred embodiment initial exposition time can be 5 to 10 ms and can be doubled each time the imaging has to be repeated at the given distance because the brightest pixels of the captured image do not fall within the preferred range. Once the brightness is adequate the sharpness of the image at the given distance is determined (e.g. using the histogram algorithm) and the distance is changed (e.g. by displacing the slide 6 in direction Y) and the procedure is repeated, i.e. the appropriate exposition time is determined again, an image is captured, and the sharpness of the image is calculated.

Once an image has been obtained at every desired focus distance within the appropriate focus range the sharpness of the images are compared. The sharpest image is examined to decide whether the observed field 35 contains fluorescent target points (i.e. whether it belongs to the fluorescent area 38). If the observed field 35 has been found to contain fluorescent target points than the focus distance and exposition time belonging to the sharpest image is recorded for the observed field 35.

If no focused image could be obtained at any focus distance (meaning that no fluorescent target points belong to the observed field 35) then a new field 35 has to be chosen. In the event of seeking an initial fine focus range the new field 35 can be the next one along the spiral path 37. Else the new field can be another selected field 35a. Advantageously such fields 35 for which no focused image could be captured are marked as non-fluorescent and can be left out when rescanning the specimen area 22a, advantageously even the vicinity of such fields 35 can be omitted.

In the case when focusing is possible (meaning that the observed field 35 has fluorescent target points) the optimal focus distance has been determined at a lower exposition time as would be necessary for obtaining high-quality image tile, i.e. the intensity of the brightest pixels are e.g. less than a fourth of the highest possible intensity. For the purpose of creating a high-quality montage image, the individual image tiles are preferably captured using a common exposition time otherwise some of the tiles could appear brighter or darker due to the different applied exposition time. However, it is difficult to tell in advance what would be the optimal exposition time for all of the target fields 35, that is, an exposition time sufficiently long for all relevant fluorescent fields 35c to be visible while not too long in order to prevent saturation in any of the captured image tiles. By way of example the optimal global exposition time can be chosen by selecting the fluorescent field 35c with the shortest exposition time (as mentioned before both focus distance and exposition time are registered for the sharpest image at every fluorescent field 35c that was focused on). Since the highest intensity values fall within a pre-chosen range it can be presumed that the field 35c needing the shortest exposition time for reaching this intensity range has the most intensive fluorescent target points, i.e. it is the brightest field 35c. By choosing this field 35c for determining a global exposition time it can be ensured that the image tiles of the other fields 35c will not be saturated either. Hence the field 35c with the lowest exposition time is moved back under the objective 3 and a new set of images are captured with increasing exposition times at the previously determined optimal focus distance in order to find the upper limit of the exposition time that can be used, i.e. the highest exposition time at which no saturation occurs. Preferably the global exposition time is chosen with a certain allowance to ensure that none of the image tiles will be saturated. For example the global exposition time is such that the highest intensity values of the field 35c with the lowest exposition time in the focusing step fall within 200 and 220 (with an 8 bit representation).

Once focusing has been performed on all the target fields 35 or all the selected target fields 35a and the global exposition time has been determined every target field 35 can be rescanned at the focus distance determined for the given field 35 or at the interpolated focus distance given by the focal plane (in the case where item (ii) is used in combination with item (i)) using the global exposition time. Target fields 35 which were found to lack fluorescent target points are preferable left out when rescanning the specimen area 22a.

The above-described embodiments are intended only as illustrating examples and are not to be considered as limiting the invention. Various modifications will be apparent to a person skilled in the art without departing from the scope of protection determined by the attached claims.

## Claims

1. A method of digitizing a specimen on a microscope slide, said specimen having fluorescent target points, the method using a fluorescence microscope system for detecting and scanning said fluorescent target points, the method comprising the steps of
a) marking the position of said specimen on said slide by visible marking means to define a specimen area containing said specimen and said fluorescent target points;
b) capturing a bright field image of at least a portion of the slide at a first optical magnification, said portion(s) containing the specimen area and determining, from the visible marking means, a position of target fields falling within said specimen area; and
c) scanning said target fields of the specimen area at a second optical magnification higher than said first optical magnification to obtain image tiles of said target fields by means of said fluorescence microscope system, said scanning being performed by making use of a global exposition time, said global exposition time being chosen from exposition times each obtained for a given target field when focusing on at least a part of said target fields takes place, wherein during said focusing on a given target field the respective exposition time is also varied until an image tile of said target field is captured with a pre-determined quality.

2. A method according to claim 1, wherein step c) includes the steps of
- selecting a plurality of target fields within said specimen area;
- focusing on each of said plurality of selected target fields at the second optical magnification and determining an optimal focus distance for each selected target field if any fluorescent target points are detected within said field;
- determining a focal surface using the optimal focus distances obtained for said plurality of selected target fields; and
- obtaining a focus distance from said focal surface when scanning all of the target fields at the second optimal magnification.

3. The method according to claim 2, including projecting a grid over the specimen area and selecting the target fields falling on the grid points of the grid.

4. The method according to claim 3, wherein the grid has a grid distance of three to eight field lengths, preferably five field lengths in one direction and three to eight field widths, preferably five field widths in a perpendicular direction-

5. The method according to any of the previous claims, wherein focusing includes varying the focus distance within a maximum focus range for a first target field containing fluorescent target points and varying the focus distance for all subsequent fields within a fine focus range contained within the maximum focus range.

6. The method according to claim 5, wherein the fine focus range is an interval centered on an optimal focus distance determined for a given target field or a varying target field, the interval being smaller than the maximum focus range interval.

7. The method according to claim 6, wherein the fine focus range interval is preferably two to ten times, even more preferably three to five times and most preferably four times as small as the maximum focus range interval.

8. The method according to any of the previous claims, including using a lower exposition time for focusing than would be necessary for assuring an optimal quality image tile of the target field for reducing overall focusing time for said target field.

9. The method according to claim 8, including setting an initial exposition time; increasing the exposition time whenever the image tile captured at a certain focus distance is not sufficiently bright and capturing a new image tile at the same focus distance while using the increased exposition time.

10. The method according to any of the preceding claims, including choosing a starting field from the target fields and focusing on said starting field for the purpose of determining an optimal focus distance for said starting field.

11. The method according to claim 10, including choosing a further target field for focusing if no fluorescent target points were found in a previous selected field.

12. The method according to any of the preceding claims, including marking the position of the specimen by contouring, by visible marking means, the region of the slide on which the specimen has been placed.

13. The method according to any of the preceding claims, including stitching together higher magnification, image tiles, obtained by the higher magnification scanning, to form a higher magnification montage image of the specimen.

14. A fluorescent imaging system (1) for the automated digitization of a specimen (16) on a microscope slide (6) having visible marking means (22), said specimen (16) having fluorescent target points, composing:
a first imaging device having a first optical magnification and being adapted for bright field imaging of at least a portion of said microscope slide (6);
a second imaging device having a second optical magnification higher than said first optical magnification and being adapted for fluorescent imaging;
a slide displacing device for supporting the microscope slide (6) and displacing said microscope slide (6) relative to said first and second imaging devices; and
a control unit connected to said imaging devices for controlling the process of digitization, said control unit being programmed
to define a specimen area (22a) containing the specimen (16) on the basis of an image obtained by the first imaging device and by means of the marking means (22),
to choose target fields (35) in the speciment area (22a),
to command said second imaging device to image said target fields (35) for obtaining image tiles thereof, said imaging being performed by making use of a global exposition time, said global exposition time being chosen from exposition times each obtained for a given target field when focusing on at least a part of said target fields (35) takes place, wherein during said focusing on a given target field the respective exposition time is also varied until an image tile of said target field is captured with a predetermined quality.

15. The fluorescent imaging system according to claim 14, wherein the first imaging device is a preview camera (2) having a field of view (E).

16. The fluorescent imaging system according to claim 15. wherein said field of view (E) is a first field of view (E), further wherein the second imaging device comprises a microscope objective (3) of a fluorescence microscope (25) and a digital camera (5), the second imaging device having a second field of view (M) smaller than said first field of view (E).

17. The fluorescent imaging system according to any of claims 14 to 16, wherein the control unit is a computer (4), a microprocessor, or a micro-controller or the like.

## Patentansprüche

1. Verfahren zum Digitalisieren einer Probe auf einem Objektträger, wobei die Probe fluoreszierende Zielpunkte aufweist, wobei bei dem Verfahren ein Fluoreszenzmikroskop-System zum Erkennen und Abtasten der fluoreszierenden Zielpunkte verwendet wird, wobei das Verfahren folgende Schritte umfasst:
a) Markieren der Position der Probe auf dem Träger durch sichtbare Markierungsmittel, um einen Probenbereich zu definieren, der die Probe und die fluoreszierenden Zielpunkte enthält;
b) Erfassen eines Hellfeldbilds von zumindest einem Abschnitt des Trägers mit einer ersten optischen Vergrößerung, wobei der bzw. die Abschnitte den Probenbereich enthalten, und Bestimmen einer Position von Zielfeldern, die in den Probenbereich fallen, anhand der sichtbaren Markierungsmittel; und
c) Abtasten der Zielfelder des Probenbereichs mit einer zweiten optischen Vergrößerung, die höher als die erste optische Vergrößerung ist, um mittels des Fluoreszenzmikroskop-Systems Bildkacheln der Zielfelder zu erhalten, wobei das Abtasten unter Verwendung einer Gesamtbelichtungszeit durchgeführt wird, wobei die Gesamtbelichtungszeit aus den Belichtungszeiten ausgewählt wird, die jeweils für ein vorgegebenes Zielfeld erhalten werden, wenn das Scharfeinstellen auf zumindest einen Teil der Zielfelder stattfindet, wobei während des Scharfeinstellens auf ein vorgegebenes Zielfeld auch die jeweilige Belichtungszeit verändert wird, bis eine Bildkachel des Zielfelds mit einer vorbestimmten Qualität erfasst wird.

2. Verfahren nach Anspruch 1, wobei Schritt c) folgende Schritte umfasst:
- Auswählen mehrerer Zielfelder innerhalb des Probenbereichs;
- Scharfeinstellen auf jedes der mehreren ausgewählten Zielfelder mit der zweiten optischen Vergrößerung und Bestimmen einer optimalen Fokusdistanz für jedes ausgewählte Zielfeld, wenn irgendwelche fluoreszierenden Zielpunkte innerhalb des Felds erkannt werden;
- Bestimmen einer Fokalfläche unter Verwendung der für die mehreren ausgewählten Zielfelder erhaltenen optimalen Fokusdistanzen; und
- Erhalten einer Fokusdistanz aus der Fokalfläche, wenn alle Zielfelder mit der zweiten optischen Vergrößerung abgetastet werden.

3. Verfahren nach Anspruch 2, umfassend das Projizieren eines Gitters über den Probenbereich und das Auswählen der Zielfelder, die auf die Gitterpunkte des Gitters fallen.

4. Verfahren nach Anspruch 3, wobei das Gitter einen Gitterabstand von drei bis acht Feldlängen, vorzugsweise fünf Feldlängen, in einer Richtung sowie von drei bis acht Feldbreiten, vorzugsweise fünf Feldbreiten, in einer senkrechten Richtung aufweist.

5. Verfahren nach irgendeinem der vorangehenden Ansprüche, wobei das Scharfeinstellen das Verändern der Fokusdistanz innerhalb eines maximalen Fokusbereichs für ein fluoreszierende Zielpunkte enthaltendes erstes Zielfeld sowie das Verändern der Fokusdistanz für alle nachfolgenden Felder innerhalb eines im maximalen Fokusbereich enthaltenen Feinfokusbereichs umfasst.

6. Verfahren nach Anspruch 5, wobei der Feinfokusbereich ein Intervall ist, das auf eine optimale Fokusdistanz zentriert ist, die für ein vorgegebenes Zielfeld oder ein variierendes Zielfeld bestimmt ist, wobei das Intervall kleiner als das Intervall des maximalen Fokusbereichs ist.

7. Verfahren nach Anspruch 6, wobei das Feinfokusbereich-Intervall vorzugsweise zwei- bis zehnmal, noch bevorzugter drei- bis fünfmal und am meisten bevorzugt viermal so klein wie das Intervall des maximalen Fokusbereichs ist.

8. Verfahren nach irgendeinem der vorangehenden Ansprüche, umfassend das Verwenden einer kürzeren Belichtungszeit zum Scharfeinstellen als für die Sicherstellung einer qualitativ optimalen Bildkachel des Zielfelds erforderlich wäre, um die gesamte Scharfeinstellzeit für das Zielfeld zu reduzieren.

9. Verfahren nach Anspruch 8, umfassend das Einstellen einer Anfangsbelichtungszeit; Verlängern der Belichtungszeit immer dann, wenn die bei einer bestimmten Fokusdistanz erfasste Bildkachel nicht hell genug ist; und Erfassen einer neuen Bildkachel bei derselben Fokusdistanz, während die verlängerte Belichtungszeit verwendet wird.

10. Verfahren nach irgendeinem der vorangehenden Ansprüche, umfassend das Auswählen eines Startfelds aus den Zielfeldern sowie das Scharfeinstellen auf das Startfeld zum Zwecke der Bestimmung einer optimalen Fokusdistanz für das Startfeld.

11. Verfahren nach Anspruch 10, umfassend das Auswählen eines weiteren Zielfelds zum Scharfeinstellen, wenn keine fluoreszierenden Zielpunkte in einem vorher ausgewählten Feld gefunden wurden.

12. Verfahren nach irgendeinem der vorangehenden Ansprüche, umfassend das Markieren der Position der Probe durch Konturieren der Region des Trägers, auf welcher die Probe positioniert wurde, mit sichtbaren Markierungsmitteln.

13. Verfahren nach irgendeinem der vorangehenden Ansprüche, umfassend das Zusammensetzen von Bildkacheln mit höherer Vergrößerung, die durch das Abtasten mit höherer Vergrößerung erhalten wurden, um ein Montagebild der Probe mit höherer Vergrößerung zu erzeugen.

14. Fluoreszenz-Bildgebungssystem (1) zur automatisierten Digitalisierung einer Probe (16) auf einem Objektträger (6), der sichtbare Markierungsmittel (22) aufweist, wobei die Probe (16) fluoreszierende Zielpunkte aufweist, Folgendes umfassend:
eine erste Bildgebungsvorrichtung, die eine erste optische Vergrößerung aufweist und an die Hellfeld-Bildgebung von zumindest einem Abschnitt des Objektträgers (6) angepasst ist;
eine zweite Bildgebungsvorrichtung, die eine zweite optische Vergrößerung aufweist, die höher als die erste optische Vergrößerung ist, und an die Fluoreszenz-Bildgebung angepasst ist;
eine Trägerverschiebevorrichtung zum Halten des Objektträgers (6) und Verschieben des Objektträgers (6) relativ zu der ersten und zweiten Bildgebungsvorrichtung; und
eine Steuereinheit, die an die Bildgebungsvorrichtungen angeschlossen ist, um das Verfahren der Digitalisierung zu steuern,
wobei die Steuereinheit derart programmiert ist, dass sie
einen die Probe (16) enthaltenden Probenbereich (22a) auf Basis eines Bilds definiert, das durch die erste Bildgebungsvorrichtung und mittels der Markierungsmittel (22) erhalten wurde,
Zielfelder (35) im Probenbereich (22a) auswählt,
die zweite Bildgebungsvorrichtung anweist, die Zielfelder (35) abzubilden, um Bildkacheln davon zu erhalten, wobei die
Bildgebung unter Verwendung einer Gesamtbelichtungszeit durchgeführt wird, wobei die Gesamtbelichtungszeit aus den
Belichtungszeiten ausgewählt wird, die jeweils für ein vorgegebenes Zielfeld erhalten werden, wenn das
Scharfeinstellen auf zumindest einen Teil der Zielfelder (35) stattfindet, wobei während des Scharfeinstellens auf ein vorgegebenes Zielfeld auch die jeweilige Belichtungszeit verändert wird, bis eine Bildkachel des Zielfelds mit einer vorbestimmten Qualität erfasst wird.

15. Fluoreszenz-Bildgebungssystem nach Anspruch 14, wobei die erste Bildgebungsvorrichtung eine Vorschaukamera (2) mit einem Sichtfeld (E) ist.

16. Fluoreszenz-Bildgebungssystem nach Anspruch 15, wobei das Sichtfeld (E) ein erstes Sichtfeld (E) ist, wobei ferner die zweite Bildgebungsvorrichtung ein Mikroskopobjektiv (3) eines Fluoreszenzmikroskops (25) und eine Digitalkamera (5) umfasst, wobei die zweite Bildgebungsvorrichtung ein zweites Sichtfeld (M) aufweist, das kleiner als das erste Sichtfeld (E) ist.

17. Fluoreszenz-Bildgebungssystem nach irgendeinem der Ansprüche 14 bis 16, wobei die Steuereinheit ein Computer (4), ein Mikroprozessor oder ein Mikrocontroller oder dergleichen ist.

## Revendications

1. Procédé de numérisation d'un spécimen sur un porte-objet, ledit spécimen ayant des points cibles fluorescents, le procédé utilisant un système de microscope à fluorescence pour détecter et balayer lesdits points cibles fluorescents, le procédé comprenant les étapes de
a) marquage de la position dudit spécimen sur ledit porte-objet par un moyen de marquage visible pour définir une zone de spécimen contenant ledit spécimen et lesdits points cibles fluorescents ;
b) capture d'une image sur fond clair d'au moins une partie du porte-objet à un premier grossissement optique, ladite (lesdites) partie(s) contenant la zone de spécimen et détermination, à partir du moyen de marquage visible, d'une position de champs cibles tombant dans ladite zone de spécimen ; et
c) balayage desdits champs cibles de la zone de spécimen à un deuxième grossissement optique supérieur audit premier grossissement optique pour obtenir des tuiles d'images desdits champs cibles au moyen dudit système de microscope à fluorescence, ledit balayage étant effectué en faisant usage d'un temps d'exposition global, ledit temps d'exposition global étant choisi à partir de temps d'exposition obtenus chacun pour un champ cible donné lorsqu'une focalisation sur au moins une partie desdits champs cibles est effectuée, dans lequel pendant ladite focalisation sur un champ cible donné, le temps d'exposition respectif est également fait varier jusqu'à ce qu'une tuile d'images dudit champ cible soit capturée avec une qualité prédéterminée.

2. Procédé selon la revendication 1, dans lequel l'étape c) inclut les étapes de
- sélection d'une pluralité de champs cibles à l'intérieur de ladite zone de spécimen ;
- focalisation sur chacun de ladite pluralité de champs cibles sélectionnés au deuxième grossissement optique et détermination d'une distance de focalisation optimale pour chaque champ cible sélectionné si de quelconques points cibles fluorescents sont détectés à l'intérieur dudit champ ;
- détermination d'une surface focale en utilisant les distances de focalisation optimales obtenues pour ladite pluralité de champs cibles sélectionnés ; et
- obtention d'une distance de focalisation à partir de ladite surface focale lors du balayage de tous les champs cibles au deuxième grossissement optique.

3. Procédé selon la revendication 2, incluant la projection d'une grille par-dessus la zone de spécimen et la sélection des champs cibles tombant sur les points de grille de la grille.

4. Procédé selon la revendication 3, dans lequel la grille a une distance de grille de trois à huit longueurs de champ, préférablement cinq longueurs de champ dans un sens et trois à huit largeurs de champ, préférablement cinq largeurs de champ dans un sens perpendiculaire.

5. Procédé selon l'une quelconque des revendications précédentes, dans lequel la focalisation inclut de faire varier la distance de focalisation à l'intérieur d'une plage de focalisation maximum pour un premier champ cible contenant des points cibles fluorescents et de faire varier la distance de focalisation pour tous les champs suivants à l'intérieur d'une plage de focalisation fine contenue à l'intérieur de la plage de focalisation maximum.

6. Procédé selon la revendication 5, dans lequel la plage de focalisation fine est un intervalle centré sur une distance de focalisation optimale déterminée pour un champ cible donné ou un champ cible variant, l'intervalle étant plus petit que l'intervalle de plage de focalisation maximum.

7. Procédé selon la revendication 6, dans lequel l'intervalle de plage de focalisation fine est préférablement deux à dix fois, encore plus préférablement trois à cinq fois et le plus préférablement quatre fois plus petit que l'intervalle de plage de focalisation maximum.

8. Procédé selon l'une quelconque des revendications précédentes, incluant l'utilisation d'un temps d'exposition plus court pour la focalisation que ce qui serait nécessaire pour assurer une tuile d'images de qualité optimale du champ cible pour réduire le temps de focalisation global pour ledit champ cible.

9. Procédé selon la revendication 8, incluant la définition d'un temps d'exposition initial ; l'augmentation du temps d'exposition lorsque la tuile d'images capturée à une certaine distance de focalisation n'est pas suffisamment lumineuse et la capture d'une nouvelle tuile d'images à la même distance de focalisation tout en utilisant le temps d'exposition augmenté.

10. Procédé selon l'une quelconque des revendications précédentes, incluant le choix d'un champ de départ parmi les champs cibles et la focalisation sur ledit champ de départ aux fins de détermination d'une distance de focalisation optimale pour ledit champ de départ.

11. Procédé selon la revendication 10, incluant le choix d'un autre champ cible pour la focalisation si aucun point cible fluorescent n'a été trouvé dans un champ précédemment sélectionné.

12. Procédé selon l'une quelconque des revendications précédentes, incluant le marquage de la position du spécimen en dessinant le contour, par le moyen de marquage visible, de la région du porte-objet sur laquelle le spécimen a été placé.

13. Procédé selon l'une quelconque des revendications précédentes, incluant la réunion de tuiles d'images à plus fort grossissement, obtenues par le balayage à plus fort grossissement, pour former une image de montage à plus fort grossissement du spécimen.

14. Système d'imagerie par fluorescence (1) pour la numérisation automatisée d'un spécimen (16) sur un porte-objet (6) ayant un moyen de marquage visible (22), ledit spécimen (16) ayant des points cibles fluorescents, comprenant :
un premier dispositif d'imagerie ayant un premier grossissement optique et étant adapté à une imagerie sur fond clair d'au moins une partie du ledit porte-objet (6) ;
un deuxième dispositif d'imagerie ayant un deuxième grossissement optique supérieur audit premier grossissement optique et étant adapté à une imagerie par fluorescence ;
un dispositif de déplacement de porte-objet pour supporter le porte-objet (6) et déplacer ledit porte-objet (6) par rapport auxdits premier et deuxième dispositifs d'imagerie ; et
une unité de commande connectée auxdits dispositifs d'imagerie pour commander le processus de numérisation, ladite unité de commande étant programmée
pour définir une zone de spécimen (22a) contenant le spécimen (16) sur la base d'une image obtenue par le premier dispositif d'imagerie et au moyen du moyen de marquage (22),
pour choisir des champs cibles (35) dans la zone de spécimen (22a),
pour commander ledit deuxième dispositif d'imagerie afin d'imager lesdits champs cibles (35) pour obtenir des tuiles d'images de ceux-ci, ladite imagerie étant effectuée en faisant usage d'un temps d'exposition global, ledit temps d'exposition global étant choisi à partir de temps d'exposition obtenus chacun pour un champ cible donné lorsqu'une focalisation sur au moins une partie desdits champs cibles (35) est effectuée, dans lequel pendant ladite focalisation sur un champ cible donné, le temps d'exposition respectif est également fait varier jusqu'à ce qu'une tuile d'images dudit champ cible soit capturée avec une qualité prédéterminée.

15. Système d'imagerie par fluorescence selon la revendication 14, dans lequel le premier dispositif d'imagerie est une caméra de prévisualisation (2) ayant un champ de vision (E).

16. Système d'imagerie par fluorescence selon la revendication 15, dans lequel ledit champ de vision (E) est un premier champ de vision (E), en outre dans lequel le deuxième dispositif d'imagerie comprend un objectif de microscope (3) d'un microscope à fluorescence (25) et une caméra numérique (5), le deuxième dispositif d'imagerie ayant un deuxième champ de vision (M) plus petit que ledit premier champ de vision (E).

17. Système d'imagerie par fluorescence selon l'une quelconque des revendications 14 à 16, dans lequel l'unité de commande est un ordinateur (4), un microprocesseur, ou un microcontrôleur ou similaire.
